# EUROPEAN PATENT APPLICATION

(11) **EP 2 733 869 A1**
(43) Date of publication of application: **21.05.2014**
(21) Application number: 12290395.8
(22) Date of filing: 14.11.2012
(51) Int. Cl.: H04B 10/116, H04M 1/725, G06Q 20/32

(54) **Method of communication using coded patterns**

(71) Applicant: Gemalto SA, 92190 Meudon (FR); Oyez, 75004 Paris (FR)
(72) Inventor: LaFargue, M. Edouard Louis Marie, 92190 Meudon (FR); Dazin, Henri, 75016 Paris (FR); Nachba, Olivier, 75004 Paris (FR)
(74) Representative: Croonenbroek, Thomas Jakob

(57) **Abstract**

The present invention relates to a method of bidirectional communication with coded patterns between communication devices, said coded patterns being machine-readable optical codes, such as barcodes. The present invention is defined, in its broadest sense, as a method of bidirectional communication between a first communication device and a second communication device wherein:
- a first code pattern is received by the first communication device,
- retrieving a message from the coded information of said first barcode,
- elaborating a response of the message,
- generating a second coded pattern comprising the elaborated response,
- transmitting the second coded pattern to the second communication device.

## Description

### FIELD OF THE INVENTION

The present invention relates to a method of communication with coded pattern between communication devices.

### BACKGROUND OF THE INVENTION

Coded pattern, in particular barcodes are well known in the art as an advantageous method of identifying and tracking items that are used in some task or that pass through a supply or distribution chain. The barcode is a binary code consisting of a field of bars and gaps arranged in a parallel configuration. The bars and gaps are arranged according to a given pattern that corresponds to some data. The configuration of the bars and gaps reflect a pattern when illuminated by a reading device such as a laser scanner for example. The optical power received by the scanner can then be processed and the data associated with the configuration extracted. Thus, in the case of barcode reading, transmission of data is performed optically.

Today, the use of communication devices, such as computers or mobile phones, able to read or scan barcodes is more and more developed. Such communication devices often include integrated barcode readers adapted to read barcode affixed to items.

However, tears, smudges, annotation or other physical damage/alteration to a barcode can render such conventional systems and/or methodologies substantially useless. If a portion of a bar code is torn from the product, a bar code scanner may not be able to correctly read the bar code. Similarly, a smudge on a product can render such barcode unreadable.

Moreover, monitoring systems and/or methods utilizing barcode readers confront a user with additional complications. Indeed, barcode readers require a line of sight in order to properly monitor products. For example, a typical barcode system requires a scanner to be within 4-8 inches of a barcode to achieve a proper read. In general, the barcode reader requires a user to carefully place the reader device on the screen.

Moreover, monitoring systems and/or methods utilizing barcode readers only offer one-way communication.

From the foregoing it will be apparent that there is a need for an improved method to provide communication mechanism for barcode.

### SUMMARY OF THE INVENTION

The present invention relates to a method of bidirectional communication based on coded patterns like a barcode between communication devices. The purpose of the present method is to provide a response, particularly a response comprising complex data, when a coded pattern is received by a communication device.

The present invention concerns devices able to implement at least a bidirectional communication of coded pattern.

The present invention is more powerful than usual optical reader communication. Indeed, the present invention effectively removes the need for the user to type response codes, thus lowering the risk of input mistake and enabling the transmission of more information. The information volume can be limited by the capabilities (resolution and signal processing capabilities) of the image sensor on both ends.

The present invention is defined, in its broadest sense, as a method of bidirectional communication between a first communication device and a second communication device wherein:
- a first coded pattern is received by the first communication device,
- retrieving a message from the coded information of said first coded pattern,
**characterized in that** it comprises the following steps
- elaborating a response of the message,
- generating a second coded pattern comprising the elaborated response,
- transmitting the second coded pattern to the second communication device.

Therefore, the method according to the present invention provides the following advantages:
- It allows providing a response comprising complex data.
- It enables bidirectional communication.
- It removes the need to type, which is source of mistakes.
- It improves ergonomy use.
- It improves bandwidth (more information is transmitted between communication devices).
- It uses standard equipment on communication devices (for instance, a camera embedded on top of screen is a standard feature in more and more laptop computers).

According to an embodiment, said step of presentation or receiving a first coded pattern to a user is performed using a website.

According to an embodiment, the coded pattern is sent from the first communication device to the second communication and vice versa.

According to an embodiment, said step of elaborating said response requires a user action such as a PIN code entry, an expected data to be entered, or a choice between different possibilities.

According to an embodiment, the response is encrypted before the generation step of the second coded pattern.

According to an embodiment, the coded pattern comprises an electronic signature.

Today, as most of the device that are sold in the world comprise a generator of coded pattern like a barcode and/or a reading device like a barcode reader then the implementation of the present invention does not require extra hardware or special client software to be installed on the user mobile terminal nor increasing the existing communication protocols, signaling resources and operation costs.

### BRIEF DESCRIPTION OF THE DRAWINGS

The following detailed description will be better understood with the drawings, in which:
Figure 1 represents the devices involved in the method according to an embodiment of the present invention; and
Figure 2 illustrates the different steps of an embodiment of the present invention.

### DETAILED DESCRIPTION OF THE EMBODIMENTS OF THE INVENTION

In the following detailed description, reference is made to the accompanying drawings that show, by way of illustration, specific embodiments in which the invention may be practiced. These embodiments are described in sufficient detail to enable those skilled in the art to practice the invention. It is to be understood that the various embodiments of the invention, although different, are not necessarily mutually exclusive. For example, a particular feature, structure, or characteristic described herein in connection with one embodiment may be implemented within other embodiments without departing from the spirit and scope of the invention.

In addition, it is to be understood that the location or arrangement of individual elements within each disclosed embodiment may be modified without departing from the spirit and scope of the invention. The following detailed description is, therefore, not to be taken in a limiting sense, and the scope of the present invention is defined only by the appended claims, appropriately interpreted, along with the full range of equivalents to which the claims are entitled. In the drawings, like numerals refer to the same or similar functionality throughout the several views.

For clarity, only those elements and steps which are useful to the understanding of the present invention have been shown in the drawings and will be described. Further, the mechanisms of data communication between the electronic circuit and its environment have not been detailed either, the present invention being here again compatible with usual mechanisms.

Moreover, when an action is said to be performed by a device, it is in fact executed by a microprocessor in this device controlled by instruction codes recorded in a program memory on the said device. An action is also ascribed to an application. This means that part of the instruction codes making up the application are executed by the microprocessor.

The solution described herein uses devices 11 such as mobile phone, PDA, tablet computer, Laptop or a notebook or computer. In an embodiment, the first device can be a server of a merchant, of a service provider, or of a bank... In general, the device 11 can be any device comprising means to generate and to read a coded pattern like for example a barcode. In other words, an optical communication 14 can be established with another device 10.

In a preferred embodiment, the first device comprises a reading device such as a scanner 13. The scanner 13 is preferably a universal product code (UPC) barcode label reader, or a built-in camera of the communication device 11. Therefore, the scanner 13 is able to 'read' multiple types of barcodes, such as a UPC barcode (as a barcode reader), and/or a two-dimensional barcode (as a built-in camera).

The term "coded pattern" is used herein to refer to a machine-readable optical code. In the examples in the specification the invention may be applicable to linear, one-dimensional, or two dimensional barcodes, or any other symbols or indict that may be read by a machine

The device 11 is also equipped with a screen 12 to output information to a user or to another device 10 and to exchange the coded pattern through an optical communication 14.

This means that the device can display on its screen 12 a coded pattern which is an optical signal that is sent to another device 10 and that can be read by the other device 10. Information can be input to device 11 by the reading device 13 if another device 10 displays a coded pattern.

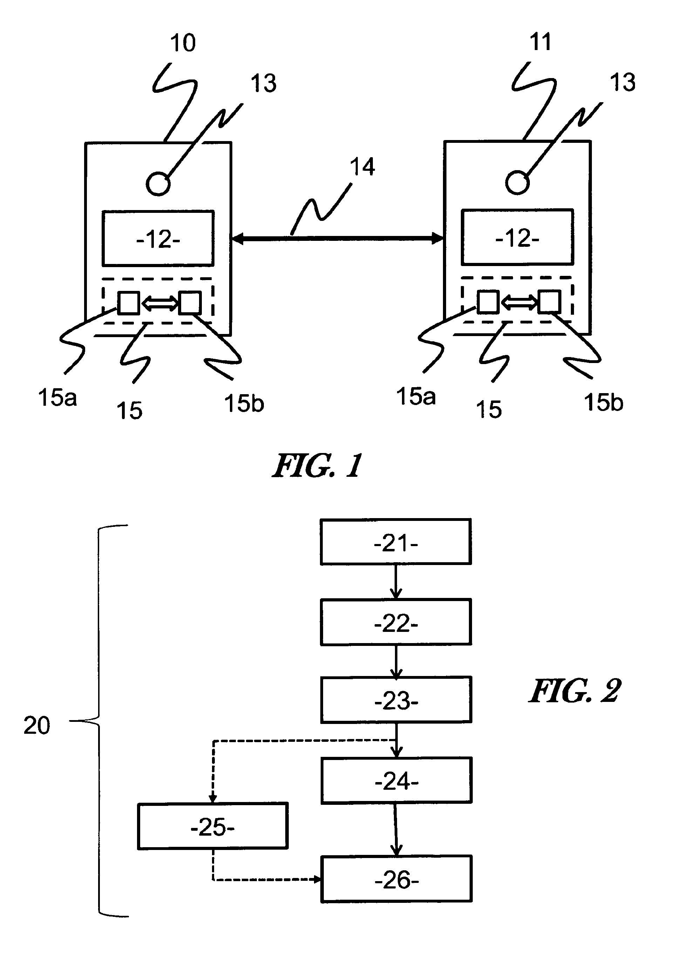

Figure 1 illustrates a first device 11 communicating through the optical communication 14 with a second device 10. The second devices 10 can be a mobile phone, PDA, tablet computer, Laptop, notebook, computer, server of a merchant, service provider, bank...

In general, the second device 10 can be any device comprising means to generate and to read a barcode. The second device 10 can be the same that the first device or different.

In the example illustrated in Figure 1, the first and the second device are mobile devices as mobile phones.

These two devices are able to exchange data through the established optical communication 14. In the present invention, these devices exchange information in a bidirectional manner by mutually presenting coded pattern like barcodes to each other.

FIG. 2 shows a flow chart of a particular form of an embodiment of the process 20 according to the implemented invention for a bidirectional communication of coded pattern like a barcode.

At step 21, a first coded pattern, for instance a 2D barcode, is received by the first device 11. This first barcode can be received in a lot of manner.

In an embodiment, user approaches an object, such as a screen of a terminal or a product in a store or at home, and brings the first device 11 into proximity with the first coded pattern associated with the object. That first coded pattern is provided or known by the second device 10. The scanner 13 retrieves coded information from the coded pattern and sends the coded information to a processing module 15. The processing module 15 is any computer processor capable of performing multiple operations on digital information in the communication device 11 and comprises in general a microprocessor 15a and program memory 15b.

The optical communication 14 may be triggered by the first device 11 or by the second device 10 through well known communication protocols linking both devices. These communication protocols can be NFC, Bluetooth, Zigbee, 2G, 3G or Wi-Fi protocols. This list is only for exemplifying existing protocols communication and is not considered to reduce the scope of the present invention. The communication protocol may be selected by default or manually by the user from a set of predefined communication protocols.

In another embodiment, the first device 11 or the second device 10 selects the protocol from the set of predefined communication protocols according to predefined criteria.

At step 22, the processing module 15 retrieves a message from the coded information of the coded pattern. That message is displayed on the screen 12 of the first device 11. This message can, for example, require a response from a user as PIN code entry, choice between different possibilities and so on. This message can comprise the identity of the second communication device to send a response. In one embodiment, the response entered by the user is encrypted according to well known encryption algorithm. Once the response of the message is entered by the user, the processing module 15 generates, at step 23, a second coded pattern. This second coded pattern comprises the response from the user.

In an embodiment, the processing module 15 then displays, at step 24, the second coded pattern (i.e. a barcode) to the first device 10. The user of the second device 10 brings said second device into proximity with the second coded pattern displayed on the screen of the first device 11. The scanner 12 of the first device retrieves coded information from the coded pattern and sends the coded information to the processing module 15 of the first device.

In another embodiment, the first device 11 then sends, at step 25, the second coded pattern to the second device 10 through the communication protocol 14. The received second coded pattern is sent to the processing module 15 of the second device 10.

At step 26, the processing module 15 of the second device 10 retrieves the response from the coded information of the second coded pattern and next relevant actions can be taken.

According to an embodiment, the method according to the present invention can be used to transfer complex or non-complex data between the first communication device 11 and the second communication device 12. This data can for instance include pictures, URL, videos or any type of data files.

The present invention enables bidirectional communication and allows providing a response comprising complex data. To enforce the security of the coded pattern data, said first and second coded pattern can comprise an electronic signature.

The method according to the present invention can also be used for electronic payment, for instance mobile electronic payment, or for identification, or else for authentication.

The following different steps show an example of implementation of the method according to the present invention:

During an transaction between a first device 11 which is a mobile phone and the second device which is a service provider,
- the second device sends the first coded pattern (i.e. a barcode) to the first device or a request to the first device to capture said first barcode associated to an object or displayed on a screen,
- after receiving said first coded pattern, the first device processes it,
- if the first coded pattern is damaged like torn or not very clear to be correctly read, the first device sends a request of a new first coded pattern to the second device. In that case the second device can send again the first barcode through the communication protocol established between these two devices,
- the first device displays on the screen the message retrieved from the first coded pattern, in this example the message comprises a request to the user to validate the transaction,
- the user enters his PIN code in response to the message,
- the first device generates then the second coded pattern based on the PIN code entered.
- The first device sends the second coded pattern generated to the second device through the communication protocol,
- The second device processes this second coded pattern and analyses whether the PIN code extracted from this second barcode corresponds to the expected data stored within the second device, then the second device authorizes to execute the requested processing.

The above specification, examples and drawings provide a complete description of the method according to the present invention. Since many embodiments of the invention can be made without departing from the spirit and scope of the invention, the invention resides in the claims herein after appended.

## Claims

1. Method of bidirectional communication between a first communication device (11) and a second communication device (10) wherein:
- a first coded pattern is received (21) by the first communication device,
- retrieving (22) a message from the coded information of said first coded pattern,
**characterized in that** it comprises the following steps
- elaborating a response of the message,
- generating (23) a second coded pattern comprising the elaborated response,
- transmitting (24, 25) the second coded pattern to the second communication device.

2. Method according to claim 1, wherein the coded pattern is received by the first communication device and the second communication device according to the following steps:
- presentation of the coded pattern to the communication device ;
- capture of said coded pattern by using a reading device of said communication device.

3. Method according to claim 2, wherein said step of presentation of a first coded pattern is performed using a website.

4. Method according to previous claims, wherein the coded pattern is sent from the first communication device to the second communication and vice versa.

5. Method according to previous claims, wherein said step of elaborating said response requires a user action.

6. Method according to previous claim, wherein said user action is a PIN code entry, an expected data to be entered, or a choice between different possibilities.

7. Method according to any of the preceding claims, wherein the response is encrypted before the generation step of the second coded pattern.

8. Method according to any of the preceding claims, wherein the coded pattern comprises an electronic signature.

9. Method according to any of the preceding claims, wherein said method of communication is used for identification, for data transfer, electronic payment, or for authentication.

10. Method according to any of the preceding claims, wherein in that said communication device is a mobile phone, a PDA, a tablet computer, a Laptop, a notebook, a computer, a server of a merchant, a server of service provider, or of a bank.
